# EUROPEAN PATENT APPLICATION

(11) **EP 4 407 710 A1**
(43) Date of publication of application: **31.07.2024**
(21) Application number: 22913837.5
(22) Date of filing: 11.11.2022
(51) Int. Cl.: H01M 4/36

(54) **POSITIVE ELECTRODE MATERIAL FOR LITHIUM ION BATTERY AND PREPARATION METHOD THEREFOR**

(30) Priority: 29.12.2021 CN 202111631871
(71) Applicant: Hubei Wanrun New Energy Technology Co., Ltd., Shiyan, Hubei 442500 (CN)
(72) Inventor: CAO, Minglei, Hubei 442500 (CN); WANG, Qin, Hubei 442500 (CN); YANG, Jiaojiao, Hubei 442500 (CN)
(74) Representative: Studio Torta S.p.A.
(86) International application number: PCT/CN2022/131292
(87) International publication number: WO 2023/124575

(57) **Abstract**

The present disclosure relates to a cathode material for a lithium ion battery, and a preparation method therefor. The cathode material is a Ti₃C₂ MXene-coated lithium manganese iron phosphate material, Ti₃C₂ MXene being uniformly coated on surfaces of lithium manganese iron phosphate nanoparticles and forming an electrically conductive mesh. The preparation method therefor comprises: adding a phosphorus source and a lithium source to a deionized water/PEG solution, to form a suspension A; adding a manganese source, an iron source, an antioxidant, and Ti₃C₂ MXene to deionized water to form a suspension B; adding the suspension B to the suspension A dropwise under continuous stirring, to form a mixed solution; then transferring the mixed solution to a hydrothermal reactor to maintain temperature; and after reaction is complete, centrifugally separating a product, and then performing washing, drying, and annealing to obtain the material. In the present disclosure, Ti₃C₂ MXene is used to coat the surface of the lithium manganese iron phosphate material, effectively improving the ion and electron transmission capacity and structural stability of the lithium manganese iron phosphate material; making it quite suitable for use as a high-energy and high-power-density cathode material for a lithium ion battery.

## Description

### Cross-Reference to Related Application

The present application claims the priority of a Chinese patent application submitted to the Patent Office of the People's Republic of China on December 29, 2021, with application No. 202111631871.X and titled "A cathode material for lithium ion battery and preparation method therefor", which is incorporated in the present application by reference in its entirety.

### Technical Field

The present disclosure belongs to the technical field of new energy materials and preparations thereof, and specifically relates to a cathode material for lithium ion battery of a Ti₃C₂ MXene-coated lithium manganese iron phosphate material and preparation method therefor. This material can be applied in lithium ion batteries as a high-performance cathode material.

### Background

Olivine type lithium iron phosphate (LiFePO₄) is one of the successfully commercialized cathode materials for lithium ion batteries. It has advantages of high safety, long cycle life, and low cost, etc., which make its market share have continuously increased in the cathode material for power batteries. However, the lower specific capacity and operating voltage (3.45Vvs.Li/Li⁺) make it difficult to further improve the energy density of LiFePO₄ power batteries. Lithium manganese iron phosphate (LiMnₓFe₁₋ₓPO₄) has a similar olivine-type structure to LiFePO₄, and has an operating voltage of 4.10V and an energy density that increased by about 20% compared to LiFePO₄. Therefore, developing high-performance LiMnₓFe₁₋ₓPO₄ cathode materials to replace LiFePO₄ cathode materials is of great significance for improving the energy density of power batteries. However, the lower electron conduction and ion diffusion rates result in poor high current charge-discharge performance of LiMnₓFe₁₋ₓPO₄. In addition, the material has poor structural stability, which reduces its electrochemical cycle stability and limits its practical application.

The use of highly conductive materials for surface coating of LiMnₓFe₁₋ₓPO₄ can effectively improve its ion and electron transmission capacity, thereby achieving good electrochemical performance. Commonly used highly conductive materials for coating of LiMnₓFe₁₋ₓPO₄ include amorphous carbon, graphene, and conductive polymers, etc. The Chinese patent for disclosure (CN109244391B) discloses a nitrogen-doped carbon-coated lithium ferromanganese phosphate material and a preparation method thereof. The nitrogen-doped carbon lithium ferromanganese phosphate material prepared by the disclosure has good conductivity, high specific capacity, and the advantages of good low temperature resistance and high rate. The Chinese patent for disclosure (CN113066969A) introduces a preparation method of a conductive polymer coated lithium iron manganese phosphate cathode material. The disclosure effectively improves the electrochemical performance of LiMnₓFe₁₋ₓPO₄ by subjecting it to polyaniline surface coating. The paper (J. Power Sources, 329 (2016) 94) reported the coating of LiMn_{0.5}Fe_{0.5}PO₄ cathode material using graphene as a carbon source. The particles with a size of 20 nm were connected by continuous graphene sheets to form a stable conductive network, and the product can achieve discharge specific capacities of 166 mAh g⁻¹ and 90 mAh g⁻¹ at 0.1C and 20C rates, respectively. Although the surface coating of the above conductive materials can enhance the conductivity of lithium manganese iron phosphate to a certain extent, they have poor interaction and affinity with lithium manganese iron phosphate, which cannot fully improve the rate performance and structural stability of lithium manganese iron phosphate.

Ti₃C₂ MXene is a novel two-dimensional material, which has a structure similar to graphene, high conductivity, abundant surface functional groups, and excellent mechanical properties.

Therefore, it is needed to solve the technical problem that the Ti₃C₂ MXene is used for surface coating of electrode materials to optimize the ion and electron transmission capacity and structural stability of electrode materials, in order to obtain high-performance cathode materials for lithium ion batteries.

### Summary

In view of the aforementioned deficiencies and improvement needs in the prior art, the present disclosure proposes a cathode material for lithium ion battery with high electrochemical performance and a preparation method therefor, which is achieved by surface coating of Ti₃C₂ MXene in order to effectively improve the ion and electron transmission capacity and structural stability of the lithium manganese iron phosphate material.

The present disclosure is realized through the following technical solutions:
the above cathode material for a lithium ion battery, the cathode material is a Ti₃C₂ MXene-coated lithium manganese iron phosphate material, specifically by uniformly coating Ti₃C₂ MXene on the surfaces of lithium manganese iron phosphate nanoparticles and forming an electrically conductive mesh.

A preparation method of the cathode material for a lithium ion battery, including adding a phosphorus source and a lithium source to a deionized water/PEG solution to form a suspension A, adding a manganese source, an iron source, an antioxidant, and Ti₃C₂ MXene to deionized water to form a suspension B, adding the suspension B to the suspension A dropwise under continuous stirring, to form a mixed solution, then transferring the mixed solution to a hydrothermal reactor to maintain the temperature for a period of time at a certain temperature, and after reaction is complete, centrifugally separating a product, then washing and oven-drying same, and finally annealing the dried product in an atmosphere furnace to obtain the Ti₃C₂ MXene-coated lithium manganese iron phosphate material.

The preparation method of the cathode material for a lithium ion battery includes the following specific steps:
(1) adding a phosphorus source and a lithium source to a deionized water/PEG solution to form a suspension A; adding a manganese source, an iron source, an antioxidant, and Ti₃C₂ MXene to deionized water to form a suspension B; adding the suspension B to the suspension A dropwise under continuous stirring, to form a mixed solution; wherein, the elemental molar ratio of lithium, manganese, iron, and phosphorus sources is Li:Mn:Fe:P = 3:1-x:x:2, 0.1≤x≤0.5, and the addition amount of Ti₃C₂ MXene should allow its content in the final product to be 5-30 wt%;
(2) transferring the mixed solution obtained in step (1) to a hydrothermal reactor, tightening the reactor, and placing it in an oven for maintaining temperature at a temperature condition of 140-200 °C for 5-20 hours;
(3) after the reaction is complete, centrifugally separating the hydrothermal product, and washing, then oven dried same under vacuum conditions at an oven drying temperature of 30-80 °C;
(4) annealing the dried hydrothermal product obtained in step (3) under a protective atmosphere at a temperature of 500-800 °C for 5-20 hours to obtain the Ti₃C₂ MXene-coated lithium manganese iron phosphate material.

The preparation method of the cathode material for a lithium ion battery, wherein the phosphorus source is phosphoric acid. The lithium source is lithium hydroxide. The manganese source is one or more of manganese sulfate, manganese carbonate, manganese acetate, and manganese oxalate. The iron source is one or more of ferrous sulfate, ferrous chloride, ferrous nitrate, and ferrous oxalate. The antioxidant is ascorbic acid. The volume ratio of deionized water to PEG in the deionized water/PEG solution is 5:1, 2:1, or 1:1.

### Beneficial effects:

The present disclosure first uses Ti₃C₂ MXene, which has high conductivity, rich surface functional groups, and good mechanical properties, to coat lithium manganese iron phosphate material, and makes improvement on the overall technological process design of the preparation method, key hydrothermal reactions, and parameters of high-temperature annealing process conditions, which effectively improves the ion and electron transmission capacity of the lithium manganese iron phosphate material, meanwhile the strong interaction between Ti₃C₂ MXene and lithium manganese iron phosphate material can enhance the structural stability of the lithium manganese iron phosphate material, so that the obtained Ti₃C₂ MXene-coated lithium manganese iron phosphate cathode material can reach an initial discharge capacity of 157.4 mAh g⁻¹ at 0.1C.

Since Ti₃C₂ MXene is used to coat the surface of the lithium manganese iron phosphate material in the present disclosure, the ion and electron transmission capacity and structural stability of the lithium manganese iron phosphate material can be effectively improved, and the Ti₃C₂ MXene-coated lithium manganese iron phosphate cathode material can reach a discharge capacity of 157.4 mAh g⁻¹ at 0.1C and a discharge capacity of 145.0 mAh g⁻¹ at 1C, making it quite suitable for use as a high-energy and high-power-density cathode material for a lithium ion battery.

### Brief Description of the Drawings

Figure 1 shows the XRD spectral diagram of lithium manganese iron phosphate and Ti₃C₂ MXene-coated lithium manganese iron phosphate;
Figure 2(a) shows the SEM image of lithium manganese iron phosphate; and Figure 2(b) shows the SEM image of Ti₃C₂ MXene-coated lithium manganese iron phosphate; and
Figure 3 shows the initial charge-discharge diagram of lithium manganese iron phosphate and Ti₃C₂ MXene-coated lithium manganese iron phosphate.

### Detailed Description of the Embodiments

The cathode material for a lithium ion battery of the present disclosure is a Ti₃C₂ MXene-coated lithium manganese iron phosphate material, specifically by uniformly coating Ti₃C₂ MXene on the surfaces of lithium manganese iron phosphate nanoparticles and forming an electrically conductive mesh, the use of Ti₃C₂ MXene to coat lithium manganese iron phosphate can effectively improve the ion and electron transmission capacity and structural stability of the lithium manganese iron phosphate.

A preparation method of the Ti₃C₂ MXene-coated lithium manganese iron phosphate cathode material for a lithium ion battery, including adding a phosphorus source and a lithium source to a deionized water/PEG solution to form a suspension A, adding a manganese source, an iron source, an antioxidant, and Ti₃C₂ MXene to deionized water to form a suspension B, adding the suspension B to the suspension A dropwise under continuous stirring, to form a mixed solution, then transferring the mixed solution to a hydrothermal reactor to maintain the temperature for a period of time at a certain temperature, and after reaction is complete, centrifugally separating a product, then washing and oven-drying same, and finally annealing the dried product in an atmosphere furnace to obtain the Ti₃C₂ MXene-coated lithium manganese iron phosphate material. This method includes the following specific steps:
(1) adding a phosphorus source and a lithium source to a deionized water/PEG solution to form a suspension A; adding a manganese source, an iron source, an antioxidant, and Ti₃C₂ MXene to deionized water to form a suspension B; adding the suspension B to the suspension A dropwise under continuous stirring, to form a mixed solution; wherein, the elemental molar ratio of lithium, manganese, iron, and phosphorus sources is Li:Mn:Fe:P = 3:1-x:x:2, 0.1≤x≤0.5, and the addition amount of Ti₃C₂ MXene should allow its content in the final product to be 5-30 wt%;
(2) transferring the mixed solution obtained in step (1) to a hydrothermal reactor, tightening the reactor, and placing it in an oven for maintaining temperature at a temperature condition of 140-200 °C for 5-20 hours;
(3) after the reaction is complete, centrifugally separating the hydrothermal product, and washing, then oven dried same under vacuum conditions at an oven drying temperature of 30-80 °C;
(4) annealing the dried hydrothermal product obtained in step (3) under a protective atmosphere at a temperature of 500-800 °C for 5-20 hours to obtain the Ti₃C₂ MXene-coated lithium manganese iron phosphate material.

Wherein, in step (1): the phosphorus source is phosphoric acid; the lithium source is lithium hydroxide; the manganese source is one or more of manganese sulfate, manganese carbonate, manganese acetate, and manganese oxalate; the iron source is one or more of ferrous sulfate, ferrous chloride, ferrous nitrate, and ferrous oxalate; the antioxidant is ascorbic acid; and the volume ratio of deionized water to PEG in the deionized water/PEG solution is 5:1, 2:1, or 1:1.

The protective atmosphere in step (4) is 95vol%Ar+5vol%H₂.

Preferably, in step (1), the volume ratio of deionized water to PEG in the deionized water/PEG solution is preferably 2:1.

Preferably, in step (1), the addition amount of Ti₃C₂ MXene allows the content of the material in the final product to be preferably 15 wt%.

Preferably, in step (2), the temperature is preferably maintained at 180°C and for a period of time of 10 hours.

Preferably, in step (3), the oven drying temperature is preferably 60 °C.

Preferably, in step (4), the annealing temperature is preferably 650 °C and the annealing time is preferably 10 hours.

In the present disclosure, by subjecting the lithium manganese iron phosphate to Ti₃C₂ MXene coating, the ion and electron transmission capacity as well as structural stability of the lithium manganese iron phosphate are effectively enhanced, making the material have prominent electrochemical performance, the obtained Ti₃C₂ MXene-coated lithium manganese iron phosphate material has an initial discharge capacity of 157.4 mAh g⁻¹ at 0.1C, an initial coulombic efficiency of higher than 99%, and a discharge capacity at 1C of 145.0 mAh g⁻¹.

The present disclosure will be further illustrated below by the following specific examples:

### Example 1

Phosphoric acid and lithium hydroxide were added to a volume ratio of 2:1 of deionized water/PEG solution to form suspension A, then manganese sulfate, ferrous sulfate, ascorbic acid, and Ti₃C₂ MXene were added to deionized water to form suspension B, the suspension B was added dropwise to the suspension A under continuous stirring to form a mixed solution, wherein the elemental molar ratio of lithium, manganese, iron, and phosphorus sources is Li:Mn:Fe:P=3:0.8:0.2:2; the above obtained mixture was transferred to a hydrothermal reactor, the reactor was tightened and placed in an oven to maintain the temperature at 180 °C for 10 hours, after the reaction was completed, the hydrothermal product was centrifugally separated, then washed, and oven-dried at 60 °C under vacuum conditions; finally, the dried hydrothermal product was annealed at 650 °C for 10 hours in a 95vol%Ar+5vol%H₂ atmosphere, after the annealing was completed, Ti₃C₂ MXene-coated lithium manganese iron phosphate material as a black powder was obtained; the content of Ti₃C₂ MXene in the product was 15 wt%, with an initial discharge capacity of 157.4 mAh g⁻¹ and an initial coulombic efficiency of 99.6%.

### Example 2

Phosphoric acid and lithium hydroxide were added to a volume ratio of 2:1 of deionized water/PEG solution to form suspension A, then manganese carbonate, ferrous chloride, ascorbic acid, and Ti₃C₂ MXene were added to deionized water to form suspension B, the suspension B was added dropwise to the suspension A under continuous stirring to form a mixed solution, wherein the elemental molar ratio of lithium, manganese, iron, and phosphorus sources is Li:Mn:Fe:P=3:0.5:0.5:2; the above obtained mixture was transferred to a hydrothermal reactor, the reactor was tightened and placed in an oven to maintain the temperature at 140°C for 20 hours, after the reaction was completed, the hydrothermal product was centrifugally separated, then washed, and oven-dried at 80°C under vacuum conditions; finally, the dried hydrothermal product was annealed at 500 °C for 20 hours in a 95vol%Ar+5vol%H₂ atmosphere, after the annealing was completed, Ti₃C₂ MXene-coated lithium manganese iron phosphate material as a black powder was obtained; the content of Ti₃C₂ MXene in the product was 5 wt%, with an initial discharge capacity of 130.4 mAh g⁻¹ and an initial coulombic efficiency of 95.6%.

### Example 3

Phosphoric acid and lithium hydroxide were added to a volume ratio of 1:1 of deionized water/PEG solution to form suspension A, then manganese acetate, ferrous nitrate, ascorbic acid, and Ti₃C₂ MXene were added to deionized water to form suspension B, the suspension B was added dropwise to the suspension A under continuous stirring to form a mixed solution, wherein the elemental molar ratio of lithium, manganese, iron, and phosphorus sources is Li:Mn:Fe:P=3:0.7:0.3:2; the above obtained mixture was transferred to a hydrothermal reactor, the reactor was tightened and placed in an oven to maintain the temperature at 160 °C for 15 hours, after the reaction was completed, the hydrothermal product was centrifugally separated, then washed, and oven-dried at 30 °C under vacuum conditions; finally, the dried hydrothermal product was annealed at 800 °C for 5 hours in a 95vol%Ar+5vol%H₂ atmosphere, after the annealing was completed, Ti₃C₂ MXene-coated lithium manganese iron phosphate material as a black powder was obtained; the content of Ti₃C₂ MXene in the product was 15 wt%, with an initial discharge capacity of 135.1 mAh g⁻¹ and an initial coulombic efficiency of 96.5%.

### Example 4

Phosphoric acid and lithium hydroxide were added to a volume ratio of 1:1 of deionized water/PEG solution to form suspension A, then manganese acetate and manganese oxalate, ferrous sulfate and ferrous oxalate, ascorbic acid, and Ti₃C₂ MXene were added to deionized water to form suspension B, the suspension B was added dropwise to the suspension A under continuous stirring to form a mixed solution, wherein the elemental molar ratio of lithium, manganese, iron, and phosphorus sources is Li:Mn:Fe:P=3:0.6:0.4:2; the above obtained mixture was transferred to a hydrothermal reactor, the reactor was tightened and placed in an oven to maintain the temperature at 180 °C for 10 hours, after the reaction was completed, the hydrothermal product was centrifugally separated, then washed, and oven-dried at 50 °C under vacuum conditions; finally, the dried hydrothermal product was annealed at 500 °C for 20 hours in a 95vol%Ar+5vol%H₂ atmosphere, after the annealing was completed, Ti₃C₂ MXene-coated lithium manganese iron phosphate material as a black powder was obtained; the content of Ti₃C₂ MXene in the product was 20 wt%, with an initial discharge capacity of 150.3 mAh g⁻¹ and an initial coulombic efficiency of 97.1%.

### Example 5

Phosphoric acid and lithium hydroxide were added to a volume ratio of 5:1 of deionized water/PEG solution to form suspension A, then manganese sulfate and manganese acetate, ferrous sulfate and ferrous nitrate, ascorbic acid, and Ti₃C₂ MXene were added to deionized water to form suspension B, the suspension B was added dropwise to the suspension A under continuous stirring to form a mixed solution, wherein the elemental molar ratio of lithium, manganese, iron, and phosphorus sources is Li:Mn:Fe:P=3:0.8:0.2:2; the above obtained mixture was transferred to a hydrothermal reactor, the reactor was tightened and placed in an oven to maintain the temperature at 200 °C for 5 hours, after the reaction was completed, the hydrothermal product was centrifugally separated, then washed, and oven-dried at 70 °C under vacuum conditions; finally, the dried hydrothermal product was annealed at 650 °C for 10 hours in a 95vol%Ar+5vol%H₂ atmosphere, after the annealing was completed, Ti₃C₂ MXene-coated lithium manganese iron phosphate material as a black powder was obtained; the content of Ti₃C₂ MXene in the product was 30 wt%, with an initial discharge capacity of 140.6 mAh g⁻¹ and an initial coulombic efficiency of 96.6%.

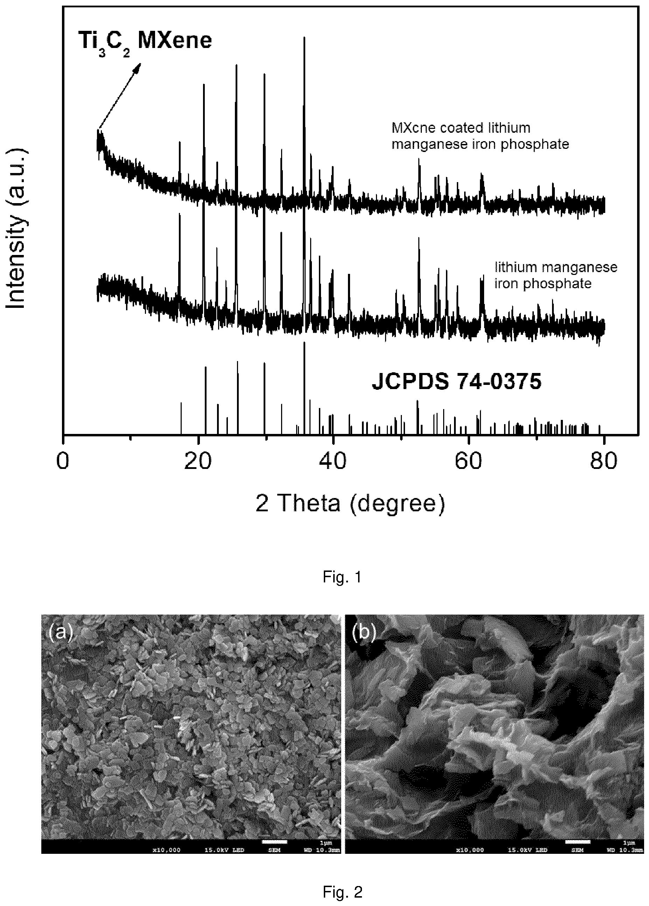

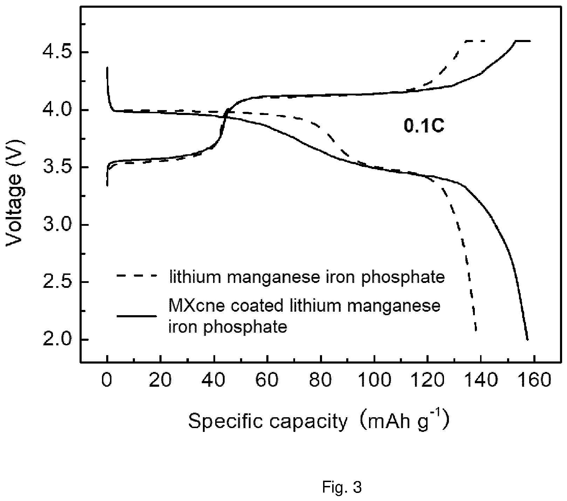

The present disclosure also adopted an uncoated lithium manganese iron phosphate material, i.e., by comparison with the uncoated lithium manganese iron phosphate material without adding Ti₃C₂ MXene during the preparation process, as shown in Figures 1, 2, and 3, it was not difficult from these figures to find that the surface coating of Ti₃C₂ MXene can effectively enhance the electrochemical performance of the lithium manganese iron phosphate material, and a cathode material for a lithium ion battery with high energy and power density can be obtained.

It is easy for those skilled in the art to understand that the above contents are merely preferred examples of the present disclosure and are not intended to limit thereto. Any modifications, equivalent substitutions, and improvements, etc. made within the spirit and principles of the present disclosure should be included in the scope of protection of the present disclosure.

## Claims

1. A cathode material for a lithium ion battery, is **characterized in that**, the cathode material is a Ti₃C₂ MXene-coated lithium manganese iron phosphate material, specifically Ti₃C₂ MXene being uniformly coated on surfaces of lithium manganese iron phosphate nanoparticles and forming an electrically conductive mesh.

2. A preparation method of the cathode material for a lithium ion battery according to claim 1, is characterized that, the preparation method comprises adding a phosphorus source and a lithium source to a deionized water/PEG solution, to form a suspension A; adding a manganese source, an iron source, an antioxidant, and Ti₃C₂ MXene to deionized water to form a suspension B; adding the suspension B to the suspension A dropwise under continuous stirring, to form a mixed solution; then transferring the mixed solution to a hydrothermal reactor to maintain the temperature for a period of time at a certain temperature; and after the reaction is complete, centrifugally separating a product, then washing and oven-drying same, and finally annealing the dried product in an atmosphere furnace to obtain the Ti₃C₂ MXene-coated lithium manganese iron phosphate material.

3. The preparation method of the cathode material for a lithium ion battery according to claim 2, the preparation method comprises the following specific steps:
(1) adding a phosphorus source and a lithium source to a deionized water/PEG solution to form a suspension A; adding a manganese source, an iron source, an antioxidant, and Ti₃C₂ MXene to deionized water to form a suspension B; adding the suspension B to the suspension A dropwise under continuous stirring, to form a mixed solution; wherein, the elemental molar ratio of lithium, manganese, iron, and phosphorus sources is Li:Mn:Fe:P ₌ 3:1-x:x:2, 0.1≤x≤0.5, and the addition amount of Ti₃C₂ MXene should allow its content in the final product to be 5-30 wt%;
(2) transferring the mixed solution obtained in step (1) to a hydrothermal reactor, tightening the reactor, and placing it in an oven for maintaining temperature at a temperature condition of 140-200 °C for 5-20 hours;
(3) after the reaction is complete, centrifugally separating the hydrothermal product, and washing, then oven dried same under vacuum conditions at an oven drying temperature of 30-80 °C;
(4) annealing the dried hydrothermal product obtained in step (3) under a protective atmosphere at a temperature of 500-800 °C for 5-20 hours to obtain the Ti₃C₂ MXene-coated lithium manganese iron phosphate material.

4. The preparation method of the cathode material for a lithium ion battery according to claim 3, wherein the phosphorus source is phosphoric acid.

5. The preparation method of the cathode material for a lithium ion battery according to claim 3, wherein the lithium source is lithium hydroxide.

6. The preparation method of the cathode material for a lithium ion battery according to claim 3, wherein the manganese source is one or more of manganese sulfate, manganese carbonate, manganese acetate, and manganese oxalate.

7. The preparation method of the cathode material for a lithium ion battery according to claim 3, wherein the iron source is one or more of ferrous sulfate, ferrous chloride, ferrous nitrate, and ferrous oxalate.

8. The preparation method of the cathode material for a lithium ion battery according to claim 3, wherein the antioxidant is ascorbic acid.

9. The preparation method of the cathode material for a lithium ion battery according to claim 3, wherein the volume ratio of deionized water to PEG in the deionized water/PEG solution is 5:1, 2:1, or 1:1.
